(19) 

(11) **EP 4 354 537 B1**

(12) **EUROPEAN PATENT SPECIFICATION**

(45) Date of publication and mention of the grant of the patent:
**12.08.2026 Bulletin 2026/33**

(21) Application number: **22896145.4**

(22) Date of filing: **18.11.2022**

(51) International Patent Classification (IPC):
***H01M 4/131*** (2010.01) ***H01M 4/62*** (2006.01)
***H01M 4/525*** (2010.01) ***H01M 4/36*** (2006.01)
***H01M 4/587*** (2010.01) ***H01M 10/0525*** (2010.01)
***H01M 4/48*** (2010.01) ***H01M 10/42*** (2006.01)

(52) Cooperative Patent Classification (CPC):
**H01M 4/131; H01M 4/364; H01M 4/483; H01M 4/525; H01M 4/587; H01M 4/62; H01M 10/4235;** Y02E 60/10

(86) International application number:
**PCT/KR2022/018336**

(87) International publication number:
**WO 2023/090948 (25.05.2023 Gazette 2023/21)**

(54) **COMPOSITION FOR CATHODE ACTIVE MATERIAL LAYER, AND LITHIUM SECONDARY BATTERY**

ZUSAMMENSETZUNG FÜR KATHODENAKTIVMATERIALSCHICHT UND LITHIUMSEKUNDÄRBATTERIE

COMPOSITION POUR COUCHE DE MATIÈRE ACTIVE DE CATHODE ET BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.11.2021 KR 20210160762**

(43) Date of publication of application:
**17.04.2024 Bulletin 2024/16**

(73) Proprietor: **LG Energy Solution, Ltd.**
**Seoul 07335 (KR)**

(72) Inventors:
- **KIM, Jeeeun**
  **Daejeon 34122 (KR)**
- **KIM, Minji**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**CN-A- 110 224 114** **CN-B- 110 224 169**
**JP-B2- 6 121 454** **JP-B2- 6 428 647**
**KR-A- 20080 058 967** **KR-A- 20190 059 115**
**KR-A- 20190 064 397**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 354 537 B1

## Description

[Technical Field]

This application claims priority to and the benefit of Korean Patent Application No. 10-2021-0160762 filed in the Korean Intellectual Property Office on November 19, 2021.

The present application relates to a composition for a positive electrode active material layer and a lithium secondary battery.

[Background Art]

Recently, with the rapid spread of electronic devices using batteries, such as not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

The lithium secondary battery generates electric energy by oxidation and reduction reactions during intercalation and deintercalation of lithium ions at a positive electrode and a negative electrode in a state in which an organic electrolytic solution or polymer electrolytic solution is filled between the positive electrode and the negative electrode, which are composed of active materials capable of intercalating and deintercalating lithium ions.

Lithium cobalt oxide ($LiCoO_2$), lithium nickel oxide ($LiNiO_2$), lithium manganese oxide ($LiMnO_2$, $LiMn_2O_4$, and the like), a lithium iron phosphate compound ($LiFePO_4$) and the like have been used as a positive electrode active material of a lithium secondary battery. Among them, lithium cobalt oxide ($LiCoO_2$) is widely used because of advantages of high operating voltage and excellent capacity characteristics, and is applied as a high voltage positive electrode active material. However, due to rising prices and unstable supply of cobalt (Co), there is a limit to its large-scale usage as a power source in fields such as electric vehicles, so there is an emerging need for developing a positive electrode active material capable of replacing cobalt.

Accordingly, a nickel-cobalt-manganese-based lithium composite transition metal oxide (hereinafter simply referred to as 'NCM-based lithium composite transition metal oxide') in which a part of cobalt (Co) is substituted with nickel (Ni) and manganese (Mn) has been developed. Recently, research has been conducted to increase the capacity of NCM-based lithium composite transition metal oxide by increasing the content of Ni in the oxide. However, a Ni-rich positive electrode active material with a high nickel content has disadvantages such as increase in resistance and increase in gas generation due to deterioration in thermal stability and increase in side reactions during electrochemical reactions.

Meanwhile, although graphite is usually used as a negative electrode active material for a lithium secondary battery, it is difficult to increase the capacity of the lithium secondary battery because graphite has a small capacity per unit mass of 372 mAh/g. Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have a problem in that the amount of lithium consumed is large and the irreversible capacity loss is large during the initial charging and discharging due to the low initial efficiency.

CN 110224169 B describes a lithium ion battery, which comprises: (1) a positive electrode, (2) a negative electrode, (3) a diaphragm, (4) electrolyte and (5) a packaging material.

CN 110224114 A relates to a cathode material for lithium ion batteries and a preparation method thereof.

[Detailed Description of the Invention]

[Technical Problem]

The present inventors intend to provide a composition for a positive electrode active material layer of a lithium secondary battery, which is capable of improving the performance of a battery, and a positive electrode, a lithium secondary battery, a battery module and a battery pack, which include the same.

[Technical Solution]

An exemplary embodiment of the present application provides a composition for a positive electrode active material layer of a lithium secondary battery, including: a positive electrode active material including a lithium composite transition metal compound which includes nickel, cobalt and manganese and includes nickel in an amount of 80 mol% or

more and less than 100 mol% among the metals except for lithium; and

an additive represented by the following Chemical Formula A:

[Chemical Formula A] $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

An additional exemplary embodiment of the present application provides a lithium secondary battery positive electrode including: a positive electrode current collector; and a positive electrode active material layer provided on the positive electrode current collector and including the composition according to the above-described exemplary embodiment.

An additional exemplary embodiment of the present application provides a lithium secondary battery including: a positive electrode; a negative electrode; a separator between the positive electrode and the negative electrode; and an electrolyte,

in which the positive electrode includes a positive electrode current collector and a positive electrode active material layer provided on the positive electrode current collector and the negative electrode includes a negative electrode current collector and a negative electrode active material layer provided on the negative electrode current collector, and
the positive electrode active material layer includes the composition according to the above-described exemplary embodiment.

According to an additional exemplary embodiment of the present application, the negative electrode active material layer of the above-described exemplary embodiment includes a silicon-based oxide in an amount of 10 parts by weight or more with respect to 100 parts by weight of the entire negative electrode active material.

An additional exemplary embodiment of the present application provides a battery module including the above-described lithium secondary battery and a battery pack including the battery module.

[Advantageous Effects]

According to the exemplary embodiments described in the present specification, the energy density of a lithium secondary battery designed in a limited space can be increased, the high output performance thereof can be improved, and the battery cycle performance can also be improved.

[Brief Description of Drawings]

FIG. 1 illustrates a 25°C cycle graph of batteries manufactured in Examples 1 to 3.
FIG. 2 is a graph illustrating the presence or absence of voltage drop during high temperature (60°C) storage of the batteries manufactured in Example 1 and Comparative Example 2 and the increase in resistance due to high temperature (60°C) storage of the batteries.

[Best Mode]

Hereinafter, the present invention will be described in more detail in order to help the understanding of the present invention.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

An exemplary embodiment of the present application provides a composition for a positive electrode active

material layer of a lithium secondary battery, including:

a positive electrode active material including a lithium composite transition metal compound which includes nickel, cobalt and manganese and includes nickel in an amount of 80 mol% or more and less than 100 mol% among the metals except for lithium; and
an additive represented by the following Chemical Formula A:

[Chemical Formula A] $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

A lithium secondary battery has a size required by its use, and needs to be designed within a limited space. Although consumer demand for increase in energy density and improvement in high output performance is increasing, there is no choice but to increase the content of negative electrode materials to match the demand when a high-capacity positive electrode material is used, so that there is a limit to increasing the battery efficiency in a limited space. In addition, depending on the type of negative electrode material, it is necessary to design a positive electrode material having an efficiency that matches the efficiency of the negative electrode material.

The composition for a positive electrode active material layer according to the exemplary embodiment of the present invention may be useful when a silicon-based oxide is used as a negative electrode active material. Specifically, when a silicon-based oxide is used as a negative electrode active material, it is characterized by using a specific composition as a positive electrode material so as to match the efficiency of the negative electrode active material. In particular, a lithium composite transition metal oxide including nickel, cobalt and manganese is used as a positive electrode active material, but it is characterized in that nickel is included in a content of 80 mol% or more and less than 100 mol% among the metals except for lithium, and simultaneously, a specific type of additive is used together.

The silicon-based oxide used as the negative electrode active material has an efficiency, for example, a ratio of the discharge capacity with respect to the charge capacity of the first cycle (charge 0.1 C to 5 mV, 0.005 C cut-off and discharge 0.1 C to 1.5 V) of typically 70% to 90% and a discharge capacity level of 1,000 to 1,600 mAh/g. As described above, the silicon-based oxide has a high capacity, and thus, may be used to increase the energy density of a battery and implement a high output, but the silicon-based oxide has low efficiency compared to graphite, so that the efficiency of the positive electrode needs to be lowered so as to match the efficiency of the negative electrode.

Therefore, in the exemplary embodiment, a silicon-based oxide is used as a negative electrode active material, and simultaneously, a high capacity material with a relatively high nickel content is used as a positive electrode active material, but by using a specific type of additive, the efficiency of the positive electrode may be made to match the efficiency according to the type of negative electrode active material.

Specifically, it is characterized by using the above-described material of chemical formula A as an additive. The additive of Chemical Formula A may provide a lithium ion source or reservoir to compensate for the irreversible capacity loss of the silicon-based oxide used as a negative electrode active material, but has a property of low efficiency compared to a general positive electrode active material. In addition, the material of Chemical Formula A has a high capacity compared to $LiNiO_2$, and thus may be blended in a relatively small amount and used. $LiNiO_2$ is vulnerable to moisture exposure in the atmosphere, and may cause gelation, for example, gelation problems of PVDF while gas is generated in the battery, thermal safety deteriorates and by-products are increased in the slurry. In contrast, the material of Chemical Formula A may serve to match the capacity and efficiency of the positive electrode with those of the negative electrode even in a relatively small amount, and may secure moisture stability and slurry stability compared to other materials such as $LiNiO_2$.

According to another exemplary embodiment of the present application, the lithium composite transition metal compound including nickel, cobalt and manganese and including 80 mol% or more and less than 100 mol% of nickel among the metals except for lithium may include one or a mixture of two or more represented by the following Chemical Formula 1.

[Chemical Formula 1] $Li_aNi_{1-b-c-d}Co_bMN_cQ_dO_{2+\delta}$

In the chemical formula, Q is any one or more elements selected from the group consisting of Na, K, Mg, Ca, Sr, Ni, Co, Ti, Al, Si, Sn, Mn, Cr, Fe, V and Zr, $1 \leq a \leq 1.5$, $0 < b \leq 0.5$, $0 < c \leq 0.5$, $0 \leq d \leq 0.1$, $0 < b+c+d \leq 0.2$ and $-0.1 \leq \delta \leq 1.0$.

In the lithium composite transition metal oxide of Chemical Formula 1, Li may be included in the content corresponding to a, that is, $1 \leq a \leq 1.5$. There is a concern in that when a is less than 1, the capacity may be reduced, and when a exceeds 1.5, the particles may be sintered in the firing process, making it difficult to prepare a positive electrode active material. Considering the remarkable effect of improving the capacity characteristics of the positive electrode active material by controlling the content of Li and the balance for sinterability during the preparation of the active material, Li may

be included more preferably in a content of $1.1 \leq a \leq 1.2$.

In the lithium composite transition metal oxide of Chemical Formula 1, Ni may be included in a content corresponding to 1-(b+c+d), for example, $0.8 \leq 1-(b+c+d) < 1$. When the content of Ni in the lithium composite transition metal oxide of Chemical Formula 1 becomes a composition of 0.8 or more, a sufficient amount of Ni to contribute to charge/discharge may be secured to achieve a high capacity. Preferably, 1-(b+c+d) that is the content of Ni may be 0.8 or more, preferably 0.83 or more, and more preferably 0.85 or more. Preferably, 1-(b+c+d) that is the content of Ni may be 0.99 or less, or 0.96 or less.

In the lithium composite transition metal oxide of Chemical Formula 1, Co may be included in a content corresponding to b, that is, $0 < b \leq 0.5$. When the content of Co in the lithium composite transition metal oxide of Chemical Formula 1 exceeds 0.5, there is a concern in that the cost is increased. Considering the remarkable effect of improving capacity characteristics due to including Co, Co may be more specifically included in a content of $0.03 \leq b \leq 0.2$, for example, $0.05 \leq b \leq 0.1$.

In the lithium composite transition metal oxide of Chemical Formula 1, Mn may be included in a content corresponding to c, that is, a content of $0 < c \leq 0.5$. There is a concern in that when c in the lithium composite transition metal oxide of Chemical Formula 1 exceeds 0.5, the output characteristics and capacity characteristics of the battery may rather deteriorate, and the Mn may be included more specifically in a content of $0.01 \leq c \leq 0.2$, $0.02 \leq c \leq 0.06$.

In the lithium composite transition metal oxide of Chemical Formula 1, Q may be a doping element included in the crystal structure of the lithium complex transition metal oxide, and Q may be included in a content corresponding to d, that is, $0 \leq d \leq 0.1$, preferably $0.005 \leq d \leq 0.05$. Q may be one or two or more selected among Na, K, Mg, Ca, Sr, Ni, Co, Ti, Al, Si, Sn, Mn, Cr, Fe, V and Zr, and for example, Q may be Al.

The above-described lithium composite transition metal oxide may have the form of secondary particles. The secondary particle refers to a form formed by aggregation of several tens to several hundreds of primary particles, and may be distinguished from the concept of a single particle composed of one primary particle, or one single particle which includes an aggregate particle of 10 or less primary particles.

The secondary particles may have a particle diameter $D_{50}$ of 1 μm to 20 μm, preferably 5 μm to 10 μm. The secondary particles may have a specific surface area (BET) of 0.05 $m^2/g$ to 10 $m^2/g$, preferably 0.1 $m^2/g$ to 1 $m^2/g$, and more preferably 0.3 $m^2/g$ to 0.8 $m^2/g$.

The secondary particles may include first particles having a relatively large particle diameter and second particles having a relatively small particle diameter, and the particle diameter distribution may be in a bi-modal state. In this case, the content of the first particles may be larger than the content of the second particles based on total 100 parts by weight of the secondary particles. For example, the first particles may be included in an amount of 60 parts by weight or more and less than 100 parts by weight, 70 parts by weight or more and 90 parts by weight or less, and the second particles may be included in an amount of more than 0 part by weight and 40 parts by weight or less, and 10 parts by weight or more and 30 parts by weight or less, based on total 100 parts by weight of the secondary particles. The first particles may have a D50 of 5 μm to 15 μm, preferably 8 μm to 10 μm, and the second particles may have a D50 of 1 μm to 8 μm, preferably 3 μm to 5 μm.

The compositions of elements such as Ni, Co, Mn, and Al may be the same in the first particles and the second particles, but may be different from each other. For example, the Ni content of the first particles may be higher than the Ni content of the second particles. The first particles may include Al as Q of Chemical Formula 1, and the second particles may have a Q content d of 0.

In an exemplary embodiment of the present application, the additive represented by Chemical Formula A is represented by the following Chemical Formula A:

[Chemical Formula A] $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z < 1$, and $0 \leq m \leq 0.5$.

In Chemical Formula A, when m is 0, the additive may be represented by the following Chemical Formula A-1.

[Chemical Formula A-1] $Li_xCo_{(1-y-z-m)}Zn_yAl_zO_4$

When M is present, M may be Ti, Zr, Mn or Ni, for example, Zr.

In Chemical Formulae A and A-1, x, y, z and m may be $5.5 \leq x \leq 6.5$, $0.2 \leq y \leq 0.4$, $0 < z \leq 0.1$, and $0 \leq m \leq 0.1$, respectively.

In an exemplary embodiment of the present application, the additive represented by Chemical Formula A may be included in an amount of 0.5 parts by weight to 10 parts by weight, and 1 part by weight to 5 parts by weight, with respect to 100 parts by weight of the above-described positive electrode active material.

The additive represented by Chemical Formula A may be included in an amount of 0.5 parts by weight or more, 0.7 parts by weight or more, 0.9 parts by weight or more, 1.1 parts by weight or more, or 1.3 parts by weight or more with respect to 100 parts by weight of the positive electrode active material. The additive represented by Chemical Formula A

may be included in an amount of 10 parts by weight or less, 9 parts by weight or less, 8 parts by weight or less, 7 parts by weight or less, 6 parts by weight or less, 5 parts by weight or less, 4 parts by weight or less, 3 parts by weight less, or 2 parts by weight or less with respect to 100 parts by weight of the positive electrode active material.

Using a content within the range as described above is advantageous in matching the efficiencies of the positive electrode and the negative electrode by adding the additive represented by Chemical Formula A. It is preferred that the efficiency of the positive electrode due to the combination of the positive electrode active material in the form of the single particle included in the positive electrode and the additive represented by Chemical Formula A is designed to be lower than the efficiency of the negative electrode due to the negative electrode active material including a silicon-based oxide or a silicon-based oxide and a carbon-based active material. Therefore, the content of the additive represented by Chemical Formula A may be determined according to the capacity and efficiency of the active materials of the positive electrode and the negative electrode, and in particular, according to the content of the silicon-based oxide.

According to an additional exemplary embodiment of the present application, in the composition for a positive electrode active material layer according to the above-described exemplary embodiment, the lithium composite transition metal compound which includes nickel, cobalt and manganese and includes 80 mol% or more and less than 100 mol% of nickel among the metals except for lithium may be included in an amount of 90 parts by weight to 100 parts by weight, for example, 100 parts by weight with respect to 100 parts by weight of the entire positive electrode active material.

According to an additional exemplary embodiment of the present application, the composition for a positive electrode active material layer according to the above-described exemplary embodiment may further include a positive electrode binder and a conductive material.

The positive electrode binder serves to improve the bonding between positive electrode active material particles and the adhesion between the positive electrode active material particles and the positive electrode current collector. As the positive electrode binder, those known in the art may be used, non-limiting examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The positive electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the composition for a positive electrode active material layer.

The conductive material included in the composition for a positive electrode active material layer is used to impart conductivity to the electrode, and can be used without particular limitation as long as the conductive material has electron conductivity without causing a chemical change in a battery. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Specifically, in an exemplary embodiment, the conductive material may include one or more of single-walled carbon nanotube (SWCNT); and multi-walled carbon nanotube (MWCNT). The conductive material may be included in an amount of 0.1 parts by weight or more and 2 parts by weight or less, for example, preferably 0.3 parts by weight or more and 1.5 parts by weight or less, and more preferably 0.5 parts by weight or more and 1.2 parts by weight or less, based on 100 parts by weight of the composition for a positive electrode active material layer.

According to an additional exemplary embodiment of the present application, the composition for a positive electrode active material layer has a viscosity of 10000 cps or less when stored at 40°C and RH 10% for 3 days. The viscosity may be a slurry viscosity when a positive electrode slurry is prepared from the composition for a positive electrode active material layer and then stored in an environment of 40°C and RH 10% for 3 days.

The viscosity is a value measured by a Brookfield viscometer at a No. 64 spindle and 12 rpm, and the RH 10% means the humidity range.

The composition for a positive electrode active material layer may have a viscosity of 1000 cps or more, 2000 cps or more, 3000 cps or more, or 4000 cps or more when stored at 40°C and RH 10% for 3 days. The composition for a positive electrode active material layer may have a viscosity of 10000 cps or less, 9000 cps or less, or 8500 cps or less when stored at 40°C and RH 10% for 3 days.

As the additive represented by Chemical Formula A is included, the composition for a positive electrode active material layer may satisfy the above range, and is advantageous in securing moisture stability and slurry stability. Specifically, although $LiNiO_2$ is vulnerable to moisture exposure in the atmosphere, and may cause gelation, for example, gelation problems of PVDF while by-products are increased in the slurry, the additive represented by Chemical Formula A

may serve to match the capacity and efficiency of the positive electrode with those of the negative electrode even in a relatively small amount, and may secure moisture stability, and slurry stability by preventing gelation in the slurry compared to other materials such as $LiNiO_2$.

An additional exemplary embodiment of the present application provides a lithium secondary battery positive electrode including:

a positive electrode current collector; and
a positive electrode active material layer provided on the positive electrode current collector and including the composition for a positive electrode active material layer according to the above-described exemplary embodiments.

An additional exemplary embodiment of the present application provides a lithium secondary battery including: a positive electrode; a negative electrode; a separator between the positive electrode and the negative electrode; and an electrolyte,

in which the positive electrode includes a positive electrode current collector and a positive electrode active material layer provided on the positive electrode current collector and the negative electrode includes a negative electrode current collector and a negative electrode active material layer provided on the negative electrode current collector, and
the positive electrode active material layer includes the composition for a positive electrode active material layer according to the above-described exemplary embodiments.

According to an additional exemplary embodiment of the present application, in the lithium secondary battery according to the above-described exemplary embodiment, the silicon-based oxide is included in an amount of 10 parts by weight or more based on 100 parts by weight of the negative electrode active material included in the negative electrode active material layer.

Based on 100 parts by weight of the negative electrode active material included in the negative electrode active material layer, the silicon-based oxide may be included in an amount of 10 parts by weight or more and 70 parts by weight or less, preferably, 10 parts by weight or more and 60 parts by weight or less.

Based on 100 parts by weight of the negative electrode active material included in the negative electrode active material layer, the silicon-based oxide may be included in an amount of 15 parts by weight or more, 15.5 parts by weight or more, 16 parts by weight or more, 16.5 parts by weight or more, and 17 parts by weight or more. Based on 100 parts by weight of the negative electrode active material included in the negative electrode active material layer, the silicon-based oxide may be included in an amount of 70 parts by weight or less, 60 parts by weight or less, 30 parts by weight or less, 20 parts by weight or less, or less than 20 parts by weight.

Using a silicon-based oxide within the above range is advantageous in implementing high capacity and high output performance. For example, the higher the content of silicon oxide, the more advantageous it is to implement high capacity and high output, but the thickness of the negative electrode may become thin, so that an appropriate thickness range for implementing processability in a mass production line needs to be designed. By using the silicon-based oxide within the above range, high output performance and processability may be implemented.

The silicon-based oxide included in the negative electrode active material layer may be present in the form of particles, and may include $SiO_x$ ($0<x<2$). The $SiO_x$ ($0<x<2$) may correspond to a matrix in the silicon-based oxide particles. The $SiO_x$ ($0<x<2$) may be in a form including Si and $SiO_2$, and the Si may also form a phase. That is, the x corresponds to the number ratio of O to Si included in the $SiO_x$ ($0<x<2$). When the silicon-based oxide particles include the $SiO_x$ ($0<x<2$), the discharge capacity of a secondary battery may be improved.

In an additional exemplary embodiment of the present application, the silicon-based oxide may further include a metal or metal oxide. For example, the silicon-based oxide may further include at least one of Li and Mg or a compound phase thereof.

When the silicon-based oxide includes Mg, the Mg may be present as a Mg compound phase. The Mg compound phase may include at least any one selected from the group consisting of, for example, Mg silicates, Mg silicides and Mg oxides. The Mg silicate may include at least any one of $Mg_2SiO_4$ and $MgSiO_3$. The Mg silicide may include $Mg_2Si$. The Mg oxide may include MgO.

When the silicon-based oxide includes Li, the Li may be present as a Li compound phase. The Li compound phase may be present in the form of at least one of a lithium silicate, a lithium silicide, and a lithium oxide. The Li compound phase may be a lithium silicate, may be, for example, represented by $Li_aSi_bO_c$ ($2\leq a\leq 4$, $0<b\leq 2$, $2\leq c\leq 5$), and more specifically, may include one or more selected from the group consisting of $Li_2SiO_3$, $Li_2Si_2O_5$, $Li_3SiO_3$, and $Li_4SiO_4$.

The Mg compound and/or Li compound are/is in a form in which particles of the silicon-based oxide are doped with the compound(s), and may be distributed on the surface and/or inside of the silicon-based compound particle. The Mg compound and/or Li compound are/is distributed on the surface and/or inside of the silicon-based oxide particle, and thus

may control the volume expansion/contraction of the silicon-based oxide particles to an appropriate level, and may serve to prevent damage to the active material. Further, the Mg compound and/or Li compound may be contained in terms of reducing the ratio of the irreversible phase (for example, $SiO_2$) of the silicon-based oxide particles to increase the efficiency of the active material.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the Mg element content of the prepared negative electrode active material may be analyzed by converting the total sum so as to be the theoretical value.

When Mg and/or Li are/is included in the silicon-based oxide particles, the content of each of the elements may be 0.1 atm% to 20 atm% with respect to 100 atm% of Si element.

According to an exemplary embodiment, the silicon-based oxide particles may further include a carbon layer provided on at least a part of the surface thereof.

The carbon layer may cover the entire surface of the silicon-based oxide particles, but may cover only a portion of the surface. Conductivity is imparted to the silicon-based oxide particles by the carbon layer, and the volume change of a negative electrode active material including the silicon-based oxide particles is effectively suppressed, so that the service life characteristics of the battery may be further improved.

In an exemplary embodiment of the present specification, the carbon layer may include at least any one of amorphous carbon and crystalline carbon.

The crystalline carbon may further improve the conductivity of the silicon-based oxide particles. The crystalline carbon may include at least any one selected from the group consisting of fullerene, carbon nanotube and graphene.

The amorphous carbon may suppress the expansion of the silicon-based oxide particles by appropriately maintaining the strength of the carbon layer. The amorphous carbon may be a carbon-based material formed using at least any one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 1 wt% to 50 wt%, specifically 5 wt% to 45 wt%, and more specifically 8 wt% to 40 wt%, based on total 100 wt% of the silicon-based oxide particles. When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment, the carbon layer may have a thickness of 1 nm to 500 nm, specifically 5 nm to 300 nm. When the above range is satisfied, the volume change of the negative electrode active material is readily suppressed and side reactions between an electrolyte solution and the negative electrode active material are suppressed, so that the service life characteristics of a battery may be improved.

When the silicon-based oxide particles include Mg and/or Li, the particles may be prepared by a method including doping the silicon-based oxide particles with Mg and/or Li.

For example, the silicon-based oxide particles including Mg may use an in-situ doping method. In one example, in the preparing of the silicon-based oxide particles including Mg, the silicon-based oxide particles may be formed through forming a mixed gas by vaporizing a powder in which a Si powder and a $SiO_2$ powder are mixed and Mg, respectively, and then mixing the vaporized powder and Mg, and heat-treating the mixed gas in a vacuum state at 800°C to 950°C. As another example, in the preparing of the silicon-based oxide particles including Mg, the silicon-based oxide particles may be formed through forming a mixed gas by mixing a powder in which a Si powder and a $SiO_2$ powder are mixed and Mg, and then vaporizing the powder and Mg; and heat-treating the mixed gas in a vacuum state at 800°C to 950°C.

The mixed powder of the Si powder and the $SiO_2$ powder may be vaporized by performing the heat treatment at 1,000°C to 1,800°C or 1,200°C to 1,500°C, and the Mg powder may be vaporized by performing the heat treatment at

500°C to 1,200°C or 600°C to 800°C. By allowing the materials to react in a gas state as described above, Mg may be uniformly distributed in the silicon-based oxide particles. In the silicon-based oxide particles, the Mg compound phase may include the above-described Mg silicates, Mg silicides, Mg oxides, and the like. The particle diameter of the silicon-based oxide particles including Mg produced by the method described above may be adjusted by a pulverization method such as a mechanical milling method, if necessary.

As another example, silicon-based oxide particles including Li may be doped by an ex-situ doping method. For example, the distributing of the Li in the silicon-based oxide particles may include forming a carbon layer on the surface of silicon-based oxide particles, and distributing Li in silicon-based oxide particles on which the carbon layer is formed.

The forming of the carbon layer on the surface of the silicon-based oxide particles may be performed by a method of injecting a carbon-based raw material gas such as methane gas and performing a heat treatment in a rotary tubular furnace. Specifically, a carbon layer may be formed by introducing the silicon-based oxide particles into a rotary tubular furnace, increasing the temperature to 800°C to 1,150°C, or 900°C to 1,050°C, or 950°C to 1,000°C at a rate of 3°C/min to 10°C/min or about 5°C/min, flowing an argon gas and a carbon-based material raw material gas while rotating the rotary tubular furnace, and performing a heat treatment for 30 minutes to 8 hours.

The distributing of the Li in the silicon-based oxide particles on which the carbon layer is formed may be performed by mixing silicon-based oxide particles on which a carbon layer is formed; a lithium metal powder or a lithium precursor, for example, LiOH, and $Li_2O$, and performing heat-treating the resulting mixture at 400°C to 1200°C, if necessary. Alternatively, the step may be performed using an electrochemical method.

Silicon-based oxide particles including both Mg and Li may also be prepared by performing both the in-situ doping of Mg and the ex-situ doping of Li described above, if necessary.

As an example, the method may include forming a carbon layer on at least a part of the surface of the silicon oxide particles, and doping the silicon oxide particles on which the carbon layer is formed with Mg and Li.

Before or after the carbon layer is formed, the particle diameter of the silicon-based oxide particles may be adjusted by a pulverization method such as a mechanical milling method, if necessary.

The forming of the carbon layer on the surface of the silicon-based oxide particles may be performed by a method of injecting a carbon-based raw material gas such as methane gas and performing a heat treatment in a rotary tubular furnace as an example. Specifically, a carbon layer may be formed by introducing the silicon-based oxide particles into a rotary tubular furnace, increasing the temperature to 800°C to 1,150°C, or 900°C to 1,050°C, or 950°C to 1,000°C at a rate of 3°C/min to 10°C/min or about 5°C/min, flowing an argon gas and a carbon-based material raw material gas while rotating the rotary tubular furnace, and performing a heat treatment for 30 minutes to 8 hours.

The doping of the silicon-based oxide particles on which the carbon layer is formed with Li and Mg may be performed by mixing silicon-based oxide particles on which a carbon layer is formed and doping material, for example, a magnesium metal powder or a magnesium precursor, for example, MgO; a lithium metal powder or a lithium precursor, for example, LiOH and $Li_2O$, and heat-treating the resulting mixture at 400°C to 1200°C, if necessary. Alternatively, the step may be performed using an electrochemical method.

According to yet another exemplary embodiment of the present invention, the silicon-based oxide particles may have an average particle diameter ($D_{50}$) of 1 μm to 30 μm. The silicon-based oxide particles may have an average particle diameter ($D_{50}$) of specifically 3 μm to 20 μm, and more specifically 5 μm to 10 μm. When the above range is satisfied, side reactions between the negative electrode active material and an electrolyte solution may be controlled, and the discharge capacity and initial efficiency of the battery may be effectively implemented. In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

According to yet another exemplary embodiment of the present invention, the silicon-based oxide particles may have a BET specific surface area of 0.01 $m^2/g$ to 150 $m^2/g$. The silicon-based oxide particles may have a BET specific surface area of preferably 0.1 $m^2/g$ to 100 $m^2/g$, particularly preferably 0.2 $m^2/g$ to 80 $m^2/g$, specifically 0.6 $m^2/g$ to 20 $m^2/g$, and more specifically 0.8 $m^2/g$ to 15 $m^2/g$. When the above range is satisfied, side reactions between an electrolyte solution and the negative electrode active material during the charging and discharging of a battery may be reduced, so that the service life characteristics of the battery may be improved. The BET surface area may be measured by a Brunauer-Emmett-Teller (BET) method. For example, the specific surface area of the silicon-based oxide particle may be measured by a BET six-point method by a nitrogen gas adsorption distribution method using a porosimetry analyzer (Bell Japan Inc., Belsorp- II mini).

According to yet another exemplary embodiment of the present invention, the silicon-based oxide particles may further include Si crystal grains. The Si crystal grains may have a particle diameter of 1 nm to 15 nm.

According to an additional exemplary embodiment of the present application, in the lithium secondary battery according to the above-described exemplary embodiments, the negative electrode active material may further include a carbon-based active material.

In an exemplary embodiment of the present application, the negative electrode active material may include a carbon-based active material, and specifically, the carbon-based material may be graphite. The graphite may be natural graphite, black lead graphite or a mixture thereof. Based on 100 parts by weight of the entire negative electrode active material included in the negative electrode active material layer, the carbon-based active material may be included in an amount of more than 0 parts by weight and 85 parts by weight or less.

According to an additional exemplary embodiment of the present application, in the lithium secondary battery according to the above-described exemplary embodiment, the negative electrode active material layer may further include a negative electrode binder in addition to a silicon-based oxide and a carbon-based active material.

The negative electrode binder serves to improve the bonding between negative electrode active material particles and the adhesion between the negative electrode active material particles and the negative electrode current collector. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder may be included in an amount of 0.1 parts by weight or more and 50 parts by weight or less, for example, preferably 0.3 parts by weight or more and 35 parts by weight or less, and more preferably 0.5 parts by weight or more and 20 parts by weight or less, based on 100 parts by weight of the negative electrode active material layer.

The negative electrode active material layer may further include a conductive material. The conductive material included in the negative electrode active material layer is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like. The content of the conductive material in the negative electrode active material layer may be 0.01 parts by weight to 30 parts by weight, preferably 0.1 parts by weight to 5 parts by weight, with respect to 100 parts by weight of the negative electrode active material layer.

In an exemplary embodiment of the present application, the positive electrode includes a positive electrode current collector and a positive electrode active material layer formed on the positive electrode current collector and including the positive electrode active material.

The positive electrode current collector is not particularly limited as long as the collector has conductivity without causing a chemical change to a battery, and for example, it is possible to use stainless steel, aluminum, nickel, titanium, calcined carbon, or aluminum or stainless steel whose surface is treated with carbon, nickel, titanium, silver, and the like. Further, the positive electrode current collector may typically have a thickness of 1 μm to 500 μm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

In an exemplary embodiment of the present application, the negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 μm to 500 μm, the thickness of the current collector is not limited thereto.

In an exemplary embodiment of the present application, the positive electrode and negative electrode active material layers may a thickness of 20 μm or more and 500 μm or less, for example, 50 μm or more and 200 μm or less. According to an example, the thickness of the positive electrode active material layer may be 90% to 110%, for example, 95% to 105% of the thickness of the negative electrode active material layer, and the thicknesses of the active material layers may be the same.

In an exemplary embodiment of the present application, a ratio (C/A) of the efficiency (C) of the positive electrode and the efficiency (A) of the negative electrode may be 1 or less, preferably, less than 1. The ratio (C/A) may be 0.8 or more, preferably 0.9 or more, more preferably 0.95 or more, and for example, 0.96 or more, or 0.97 or more. Furthermore, in an exemplary embodiment of the present application, the difference between the efficiency (C) of the positive electrode and the efficiency (A) of the negative electrode may be 10% or less, for example, 5% or less, or 3% or less. Further, in an exemplary embodiment of the present application, the efficiency (C) of the positive electrode and the efficiency (A) of the

negative electrode are each preferably 80% or more, more preferably 83% or more, and even more preferably 85% or more. When the positive electrode and the negative electrode have the positive electrode and negative electrode efficiencies as described above, and it is possible to express a target high capacity from the initial stage while the positive electrode irreversible capacity is larger.

In an exemplary embodiment of the present application, the ratio (AA/BB) of the content (AA) of the additive represented by Chemical Formula A with respect to 100 parts by weight of the positive electrode active material to the content (BB) of the silicon-based oxide with respect to 100 parts by weight of the negative electrode active material may be 0.01 to 0.5, more preferably 0.05 to 0.5, and even more preferably 0.1 to 0.3.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

A lithium secondary battery according to an exemplary embodiment of the present invention may be a cylindrical battery. The cylindrical battery means that the form of the battery itself, which includes an assembly including a positive electrode, a negative electrode, a separator and an electrolyte, is cylindrical, and specifically, may be composed of a cylindrical can, a battery assembly provided inside the cylindrical can, and a top cap. It is desirable to use a cylindrical battery, which is free depending on the amount of gas compared to the pouch battery, but the present invention is not limited thereto.

An additional exemplary embodiment of the present invention provides a battery module including the above-described cylindrical battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary batteries according to exemplary embodiments of the present invention stably

exhibit excellent discharge capacity, output characteristics and cycle performance, the lithium secondary battery may be used as a power source not only for a mobile device such as a mobile phone, a laptop-sized computer, and a digital camera, but also for a medium- or large-sized device selected from the group consisting of an electric vehicle, a hybrid electric vehicle, a plug-in hybrid electric vehicle, and a power storage system. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

Hereinafter, preferred embodiments will be suggested to facilitate understanding of the present invention.

**<Example 1>**

An aluminum foil having a thickness of 30 μm was coated with a composition for a positive electrode active material layer, including 97.49 parts by weight of a lithium composite transition metal compound which has contents of 88 mol% of Ni, 7 mol% of Co, 4 mol% of Mn, and 1.8 mol% of Al among metals except for lithium as a positive electrode active material and is in the form of a secondary particle, and a $Li_6Co_{0.7}Zn_{0.25}Al_{0.05}O_4$ additive (1.3 parts by weight based on 100 parts by weight of a positive electrode active material), 1.85 parts by weight of PVDF as a binder, and 0.66 parts by weight of a CNT pre-dispersion including CNT as a conductive material and a dispersing agent, based on 100 parts by weight of the positive electrode active material layer, so as to have a thickness of 80 μm in a dry state, and then the coated aluminum foil was dried to manufacture a positive electrode.

A copper foil having a thickness of 15 μm was coated with a composition for forming a negative electrode active material layer, including 98.10 parts by weight of artificial graphite and natural graphite (7 : 3 weight ratio, 90 parts by weight based on 100 parts by weight of a negative electrode active material) as a negative electrode active material, and a silicon-based oxide SiO (10 parts by weight based on 100 parts by weight of the negative electrode active material), 1 part by weight of styrene-butadiene rubber (SBR) as a binder and carboxymethyl cellulose (CMC) and further including 0.9 parts by weight of a CNT pre-dispersion including a dispersing agent and a single-walled CNT, based on 100 parts by weight of the negative electrode active material layer so as to have a thickness of 80 μm in a dry state, and then the coated copper foil was dried to manufacture a negative electrode.

A separator was stacked between the positive electrode and the negative electrode, and an electrolyte solution (1.3M $LiPF_6$, VC2/SN (succinonitrile)=0.5%) was injected to manufacture a battery.

The content of the additive was set to 1.3 parts by weight based on 100 parts by weight of the positive electrode active material such that the positive electrode efficiency was about 87%, and a positive electrode slurry was prepared as a composition for a positive electrode active material layer, including the additive, and then the viscosity of the slurry was measured according to a storage box in an environment of 40°C and RH 10%, and the results are shown in Table 1.

**<Example 2>**

A negative electrode was manufactured in the same manner as in Example 1, except that based on 100 parts by weight of the negative electrode active material, the content of a silicon-based oxide SiO was 5 parts by weight.

**<Example 3>**

A negative electrode was manufactured in the same manner as in Example 1, except that based on 100 parts by weight of the negative electrode active material, the content of a silicon-based oxide SiO was 15 parts by weight.

[Table 1]

| | Positive electrode | Negative electrode | Design capacity | Remark (25°C 1C/1C cycle) |
|---|---|---|---|---|
| Example 1 | Secondary particle positive electrode material + LCZAO 1.3% | SiO 10% (Gr 90%) | Target | 81%@100$^{th}$ |
| Example 2 | | SiO 5% (Gr 95%) | -6% (vs. Target) | 73%@100$^{th}$ |
| Example 3 | | SiO 15% (Gr 85%) | +4% (vs. Target) | 63%@100$^{th}$ |

Referring to Table 1, Example 1 includes 10 parts by weight of a silicon-based oxide SiO and 90 parts by weight of graphite, Example 2 includes 5 parts by weight of a silicon-based oxide SiO and 95 parts by weight of graphite, and Example 3 includes 15 parts by weight of a silicon-based oxide SiO and 85 parts by weight of graphite, based on 100 parts by weight of the negative electrode active material according to the present invention It can be confirmed that Example 2 has a decrease in design capacity by 6% compared to Example 1, and it can be seen that when the content of a silicon-based oxide SiO in the negative electrode active material is less than 10 parts by weight, the design capacity of the lithium

secondary battery is reduced.

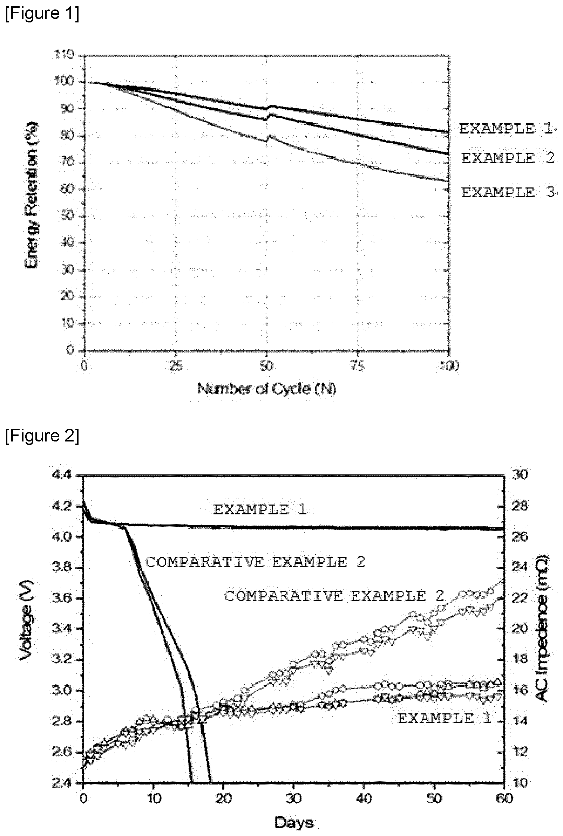

In addition, the energy retention rate (%) was evaluated by charging and discharging the batteries manufactured in Examples 1 to 3 at 25°C, and is shown in the following FIG. 1.

Charging conditions: CCCV 4.2V 1C 1/20C cut-off at 25°C / rest 30 min
Discharging conditions: CC 1C 2.5V cut-off @25°C / rest 30 min
Each energy retention rate (%) was derived by the following calculations.

Capacity retention rate (%) = (Nth times discharge capacity / 1 time discharge capacity)×100

Energy retention rate (%) = capacity retention rate (%)× Nominal voltage

FIG. 1 is a 25°C cycle graph of charging and discharging the battery at 25°C, and illustrates a curve of the number of cycles (N) - energy retention rate (%), and the energy retention rate when the number of cycles is set to 100 times is shown in the Remark of Table 1.

It can be confirmed that the energy retention rate is maintained relatively high in Examples 1 to 3, and in particular, in Example 1, it was possible to confirm excellent results in which the energy retention rate is 80% or more and the capacity retention rate is maintained high when the number of cycles is set to 100 times at 25°C. From this, it can be seen that it is important to set an appropriate efficiency between the positive electrode and the negative electrode.

<Comparative Example 1>

A positive electrode was manufactured in the same manner as in Example 1, except that the additive included in the positive electrode active material layer was $LiNiO_2$ (4.5 parts by weight based on 100 parts by weight of the positive electrode active material).

The content of $LiNiO_2$ was set to 4.5 parts by weight based on 100 parts by weight of the positive electrode active material such that the positive electrode efficiency was about 87%, and the slurry viscosity was measured in the same manner as in Example 1, and the results are shown in Table 2.

[Table 2]

| | Day 0 | Day 1 | Day 2 | Day 3 |
|---|---|---|---|---|
| Comparative Example 1 | 4,900 cps | 9,000 cps | gelation | |
| Example 1 | 4,500 cps | 5,200 cps | 6,750 cps | 8,500 cps |

Referring to Table 2, it could be confirmed that Example 1 includes an additive represented by Chemical Formula A according to the present invention, and is advantageous in slurry stability by preparing a positive electrode slurry as a composition for a positive electrode active material layer, and then maintaining a viscosity range of 10,000 cps or less without exceeding a viscosity of 10,000 cps until day 3 of storage in an environment of 40°C and RH 10% or without being gelled.

In contrast, it could be confirmed that Comparative Example 1 includes $LiNiO_2$ instead of the additive represented by Chemical Formula A according to the present invention, and a positive electrode slurry was prepared as a composition for forming a positive electrode active material layer, and then the viscosity on day 1 of storage was 9,000 cps in an environment of 40°C and RH 10%, and the positive electrode slurry was gelled on day 2 of storage. It can be confirmed that in the case of $LiNiO_2$, gelation occurs due to the rapid increase in viscosity, which may affect the processability during the manufacture of the electrode, and thus, may cause a problem of deterioration in slurry stability.

**<Comparative Example 2>**

A positive electrode was manufactured in the same manner as in Example 1, except that $LiMn_2O_4$ was included as the positive electrode active material.

The contents (based on 100 parts by weight of the negative electrode active material) of a positive electrode material and a silicon-based oxide SiO in Example 1 and Comparative Example 2 are shown in Table 3.

[Table 3]

| | Positive electrode | Negative electrode | Design capacity | Remarks |
|---|---|---|---|---|
| Example 1 | Secondary particle positive electrode material + LCZAO 1.3% | SiO 10% (Gr 90%) | Target | |
| Comparative Example 2 | LMO positive electrode material ($LiMn_2O_4$) + LCZAO 1.3% | SiO 10% (Gr 90%) | -40% (vs. Target) | Large amount of metal eluted |

Referring to Table 3, Example 1 includes the positive electrode active material and the additive according to the present invention, and Comparative Example 2 includes a LMO positive electrode material ($LiMn_2O_4$) instead of the positive electrode active material according to the invention. It can be confirmed that Comparative Example 2 has a decrease in design capacity by 40% compared to Example 1, and it can be seen that when the positive electrode active material according to the present invention is not included, the design capacity of the lithium secondary battery is reduced.

FIG. 2 is a graph illustrating the presence or absence of voltage drop during high temperature (60°C) storage of the batteries manufactured in Example 1 and Comparative Example 2 and the increase in resistance due to high temperature (60°C) storage of the batteries.

Charging conditions: 0.25 C 4.2 V, 250 mA cut-off at 25°C, Storage at 60°C

Referring to FIG. 2, the voltage drop phenomenon should not occur until about day 30 of high temperature (60°C) storage, but it could be confirmed that in Comparative Example 2, the voltage drop phenomenon occurred on about day 20 of high temperature (60°C) storage, and an increase in resistance due to high temperature (60°C) storage occurred. In contrast, it could be confirmed that in Example 1, the voltage was maintained almost constant even on about day 60, and the increase in resistance due to high temperature (60°C) storage appeared relatively small. It can be seen that the positive electrode active material according to the present invention is advantageous in terms of design capacity, voltage drop during high temperature (60°C) storage, and an increase in resistance due to high temperature (60°C) storage.

## Claims

**1.** A composition for a positive electrode active material layer of a lithium secondary battery, comprising:

a positive electrode active material comprising a lithium composite transition metal compound which comprises nickel, cobalt and manganese and comprises nickel in an amount of 80 mol% or more and less than 100 mol% among the metals except for lithium; and
an additive represented by the following Chemical Formula A:

[Chemical Formula A] $Li_xCo_{(1-y-z-m)}Zn_yAl_zM_mO_4$

in Chemical Formula A, M is Ti, Zr, Mn or Ni, $5 \leq x \leq 7$, $0 < y \leq 0.5$, $0 < z \leq 0.5$, $0 < y+z+m < 1$, and $0 \leq m \leq 0.5$.

**2.** The composition of claim 1, wherein the additive is comprised in an amount of 0.5 to 10 parts by weight with respect to 100 parts by weight of the positive electrode active material.

**3.** The composition of claim 1, wherein the lithium composite transition metal compound which comprises nickel, cobalt and manganese and comprises 80 mol% or more and less than 100 mol% of nickel among the metals except for lithium is comprised in an amount of 90 parts by weight to 100 parts by weight with respect to 100 parts by weight of the entire positive electrode active material.

**4.** The composition of claim 1, further comprising a positive electrode binder and a conductive material.

**5.** The composition of claim 1, wherein the composition has a viscosity of 10 000 cps (10 Pa.s) or less during storage in 40°C and RH 10% for 3 days, wherein the viscosity is a value measured by a Brookfield viscometer at No. 64 spindle and 12 rpm, and the RH 10% means the humidity range.

**6.** A positive electrode of a lithium secondary battery, comprising:

a positive electrode current collector; and
a positive electrode active material layer provided on the positive electrode current collector and comprising the composition according to any one of claims 1 to 5.

7. A lithium secondary battery comprising:

a positive electrode;
a negative electrode;
a separator provided between the positive electrode and the negative electrode; and
an electrolyte,
wherein the positive electrode comprises a positive electrode current collector and a positive electrode active material layer provided on the positive electrode current collector and the negative electrode comprises a negative electrode current collector and a negative electrode active material layer provided on the negative electrode current collector, and
the positive electrode active material layer comprises the composition according to any one of claims 1 to 5.

8. The lithium secondary battery of claim 7, wherein the negative electrode active material layer comprises a silicon-based oxide in an amount of 10 parts by weight or more with respect to 100 parts by weight of the entire negative electrode active material.

9. The lithium secondary battery of claim 8, wherein the negative electrode active material layer further comprises a carbon-based active material.

10. The lithium secondary battery of claim 8, wherein the silicon-based oxide comprises at least one of Mg and Li.

11. The lithium secondary battery of claim 9, wherein the negative electrode active material layer further comprises a negative electrode binder and a conductive material.

12. The lithium secondary battery of claim 7, wherein the lithium secondary battery is a cylindrical battery.

13. A battery module comprising the lithium secondary battery according to claim 7.

14. A battery pack comprising the battery module of claim 13.

**Patentansprüche**

1. Zusammensetzung für ein Aktivmaterial für eine positive Elektrode einer Lithiumsekundärbatterie, umfassend:

ein Aktivmaterial für eine positive Elektrode, umfassend eine Lithium-Komposit-Übergangsmetallverbindung, die Nickel, Kobalt und Mangan umfasst und Nickel in einer Menge von 80 Mol-% oder mehr und weniger als 100 Mol-% unter den Metallen außer Lithium umfasst; und
ein durch die folgende chemische Formel A dargestelltes Additiv:

[chemische Formel A] $Li_xCo_{(1-y-z-m)}Zn_yAl_zM_mO_4$

wobei, in der chemischen Formel A, M Ti, Zr, Mn oder Ni ist, $5 \leq x \leq 7$, $0 < y \leq 0,5$, $0 < z \leq 0,5$, $0 < y+z+m < 1$ und $0 \leq m \leq 0,5$.

2. Zusammensetzung gemäß Anspruch 1, worin das Additiv in einer Menge von 0,5 bis 10 Gewichtsteilen, basierend auf 100 Gewichtsteilen des Aktivmaterials für eine positive Elektrode, umfasst ist.

3. Zusammensetzung gemäß Anspruch 1, worin die Lithium-Komposit-Übergangsmetallverbindung, die Nickel, Cobalt und Mangan umfasst und Nickel in einer Menge von 80 Mol-% oder mehr und weniger als 100 Mol-% unter den Metallen außer Lithium umfasst, in einer Menge von 90 Gewichtsteilen bis 100 Gewichtsteilen, basierend auf 100 Gewichtsteilen des gesamten Aktivmaterials für eine positive Elektrode, umfasst ist.

4. Zusammensetzung gemäß Anspruch 1, ferner umfassend ein Bindemittel für eine positive Elektrode und ein leitfähiges Material.

5. Zusammensetzung gemäß Anspruch 1, worin die Zusammensetzung eine Viskosität von 10.000 cps (10 Pa.s) oder weniger während der Lagerung bei 40 °C und 10 % relativer Luftfeuchtigkeit (RH) für 3 Tage, worin die Viskosität ein mit einem Brookfield-Viskosimeter bei einer Spindel Nr. 64 und 12 U/min gemessener Wert ist und "RH 10 %" der Feuchtigkeitsbereich ist.

6. Positive Elektrode einer Lithiumsekundärbatterie, umfassend:

   einen Stromabnehmer für eine positive Elektrode; und
   eine Schicht aus Aktivmaterial für eine positive Elektrode, die auf dem Stromabnehmer für eine positive Elektrode bereitgestellt ist und die Zusammensetzung gemäß einem der Ansprüche 1 bis 5 umfasst.

7. Lithiumsekundärbatterie, umfassend:

   eine positive Elektrode;
   eine negative Elektrode;
   einen zwischen der positiven Elektrode und der negativen Elektrode bereitgestellten Separator; und
   einen Elektrolyten,
   worin die positive Elektrode einen Stromabnehmer für eine positive Elektrode und eine auf dem Stromabnehmer für eine positive Elektrode bereitgestellte Schicht aus Aktivmaterial für eine positive Elektrode umfasst und die negative Elektrode einen Stromabnehmer für eine negative Elektrode und eine auf dem Stromabnehmer für eine negative Elektrode bereitgestellte Schicht aus Aktivmaterial für eine negative Elektrode umfasst, und
   die Schicht aus Aktivmaterial für eine positive Elektrode die Zusammensetzung gemäß einem der Ansprüche 1 bis 5 umfasst.

8. Lithiumsekundärbatterie gemäß Anspruch 7, worin die Schicht aus Aktivmaterial für eine negative Elektrode ein Silicium-basiertes Oxid in einer Menge von 10 Gewichtsteilen oder mehr, basierend auf 100 Gewichtsteilen des gesamten Aktivmaterials für eine negative Elektrode, umfasst.

9. Lithiumsekundärbatterie gemäß Anspruch 8, worin die Schicht aus Aktivmaterial für eine negative Elektrode ferner ein Aktivmaterial auf Kohlenstoffbasis umfasst.

10. Lithiumsekundärbatterie gemäß Anspruch 8, worin das Silicium-basierte Oxid mindestens eines von Mg und Li umfasst.

11. Lithiumsekundärbatterie gemäß Anspruch 9, worin die Schicht aus Aktivmaterial für eine negative Elektrode ferner ein Bindemittel für eine negative Elektrode und ein leitfähiges Material umfasst.

12. Lithiumsekundärbatterie gemäß Anspruch 7, worin die Lithiumsekundärbatterie eine zylindrische Batterie ist.

13. Batteriemodul, das die Lithiumsekundärbatterie gemäß Anspruch 7 umfasst.

14. Batteriepack, der das Batteriemodul gemäß Anspruch 13 umfasst.

## Revendications

1. Composition pour couche de matière active de cathode d'une batterie secondaire au lithium, comprenant :

   une matière active de cathode comprenant un composé de métal de transition composite du lithium qui comprend du nickel, du cobalt et du manganèse et comprend du nickel dans une teneur de 80 % molaire ou plus et inférieure à 100 % molaire parmi les métaux à l'exception du lithium ; et
   un additif représenté par la formule chimique A suivante :

   [Formule chimique A] $Li_xCo_{(1-y-z-m)}Zn_yAl_zM_mO_4$

   dans la formule chimique A, M est Ti, Zr, Mn ou Ni, $5 \leq x \leq 7$, $0 < y \leq 0,5$, $0 < Z \leq 0,5$, $0 < y+z+m < 1$, et $0 \leq m \leq 0,5$.

2. Composition selon la revendication 1, dans laquelle l'additif est compris en une quantité de 0,5 à 10 parties en poids par rapport à 100 parties en poids de la matière active de cathode.

**3.** Composition selon la revendication 1, dans laquelle le composé de métal de transition composite du lithium qui comprend du nickel, du cobalt et du manganèse et comprend 80 % molaire ou plus et moins de 100 % molaire de nickel parmi les métaux à l'exception du lithium est compris en une quantité de 90 parties en poids à 100 parties en poids par rapport à 100 parties en poids de la totalité de la matière active de cathode.

**4.** Composition selon la revendication 1, comprenant en outre un liant de cathode et un matériau conducteur.

**5.** Composition selon la revendication 1, dans laquelle la composition présente une viscosité de 10 000 cps (10 Pa.s) ou moins pendant le stockage à 40 °C et à une HR de 10 % pendant 3 jours, dans laquelle la viscosité est une valeur mesurée par un viscosimètre Brookfield avec le mobile n° 64 et à 12 tr/min, et la HR de 10 % désigne la plage d'humidité.

**6.** Cathode d'une batterie secondaire au lithium, comprenant :

un collecteur de courant de cathode ; et
une couche de matière active de cathode disposée sur le collecteur de courant de cathode et comprenant la composition selon l'une quelconque des revendications 1 à 5.

**7.** Batterie secondaire au lithium comprenant :

une cathode ;
une anode ;
un séparateur disposé entre la cathode et l'anode ; et
un électrolyte,
dans lequel la cathode comprend un collecteur de courant de cathode et une couche de matière active de cathode disposée sur le collecteur de courant de cathode et l'anode comprend un collecteur de courant d'anode et une couche de matière active d'anode disposée sur le collecteur de courant d'anode, et
la couche de matière active de cathode comprend la composition selon l'une quelconque des revendications 1 à 5.

**8.** Batterie secondaire au lithium selon la revendication 7, dans laquelle la couche de matière active d'anode comprend un oxyde à base de silicium en une quantité de 10 parties en poids ou plus par rapport à 100 parties en poids de la totalité de la matière active d'anode.

**9.** Batterie secondaire au lithium selon la revendication 8, dans laquelle la couche de matériau actif d'anode comprend en outre un matériau actif à base de carbone.

**10.** Batterie secondaire au lithium selon la revendication 8, dans laquelle l'oxyde à base de silicium comprend au moins un de Mg et Li.

**11.** Batterie secondaire au lithium selon la revendication 9, dans laquelle la couche de matière active d'anode comprend en outre un liant d'anode et un matériau conducteur.

**12.** Batterie secondaire au lithium selon la revendication 7, dans laquelle la batterie secondaire au lithium est une batterie cylindrique.

**13.** Module de batterie comprenant la batterie secondaire au lithium selon la revendication 7.

**14.** Bloc-batterie comprenant le module de batterie de la revendication 13.

[Figure 1]

Energy Retention (%)
Number of Cycle (N)
EXAMPLE 1
EXAMPLE 2
EXAMPLE 3

[Figure 2]

Voltage (V)
AC Impedence (mΩ)
Days
EXAMPLE 1
COMPARATIVE EXAMPLE 2
COMPARATIVE EXAMPLE 2
EXAMPLE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210160762
- CN 110224169 B
- CN 110224114 A